(19) Europäisches Patentamt
European Patent Office
Office européen des brevets

(11) Veröffentlichungsnummer: **0 054 632**
**B1**

# EUROPÄISCHE PATENTSCHRIFT

(12)

(45) Veröffentlichungstag der Patentschrift:
**08.06.83**

(21) Anmeldenummer: **81107890.6**

(22) Anmeldetag: **03.10.81**

(51) Int. Cl.³: **C 09 J 3/14**, C 09 J 3/16, C 08 L 33/08, C 08 L 33/10, C 08 L 75/04, C 08 G 18/02, C 07 C 119/042

(54) **Härtbares Klebmittel.**

(30) Priorität: **19.12.80 DE 3047926**

(43) Veröffentlichungstag der Anmeldung:
**30.06.82 Patentblatt 82/26**

(45) Bekanntmachung des Hinweises auf die Patenterteilung:
**08.06.83 Patentblatt 83/23**

(84) Benannte Vertragsstaaten:
**AT BE CH FR GB IT LI LU NL SE**

(56) Entgegenhaltungen:
**keine**

(73) Patentinhaber: **Th. Goldschmidt AG, Goldschmidtstrasse 100, D-4300 Essen (DE)**

(72) Erfinder: **Fock, Jürgen, Dr., Mörsenbroicher Weg 114, D-4000 Düsseldorf 30 (DE)**
Erfinder: **Schedlitzki, Dietmar, Dr., Potthoffs Börde 18, D-4300 Essen (DE)**

**EP 0 054 632 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Härtbares Klebmittel

Die Erfindung betrifft ein härtbares Klebmittel auf Basis eines reaktiven Acrylat- und/oder Methacrylatcopolymerisates.

Aus der DE-PS 25 24 197 ist die Verwendung eines Terpolymerisates, bestehend aus
20 bis 45 Gew.-% Acryl- und/oder Methacrylnitril,
45 bis 70 Gew.-% eines Acrylsäurealkylesters mit 1 bis 12 C-Atomen im Alkylrest und
1 bis 10 Gew.-% Acryl-, Methacryl- oder Itaconsäure,

wobei die Summe der Monomeren 100 Gew.-% betragen muss und das erhaltene Copolymerisat eine Grenzviskosität von 0,1 bis 0,8 [100 ml · $g^{-1}$] bei 20°C in Chloroform aufweist, gegebenenfalls im Gemisch mit bis zu 35 Gew.-% eines Epoxidharzes oder eines Glycidylgruppen enthaltenden Phenolformaldehydharzes, als Klebmittel bekannt. Diese Klebmittel ermöglichen Verklebungen hoher Zugscherfestigkeit und guter Schälfestigkeit. Das Klebmittel kann als Folie zum Verkleben von Metalloberflächen, aber auch zum Verkleben von Kunststoffolien mit Metalloberflächen verwendet werden. Sind diese Klebmittel frei von Epoxidharzen oder von Glycidylgruppen enthaltenden Phenolformaldehydharzen, bleiben die Klebmittel thermoplastisch. Bei Anwesenheit von Epoxidharzen oder von Glycidylgruppen enthaltenden Phenolformaldehydharzen im Klebmittel sind die Klebmittel hitzehärtbar, wobei Temperaturen von etwa 130°C zur Aushärtung benötigt werden.

Der vorliegenden Erfindung liegt die Aufgabe zugrunde, härtbare Klebmittel zu erhalten, welche bei Erhalt der guten Klebeigenschaften möglichst niedrigviskos sind und eines Lösungs- und/oder Verdünnungsmittels, wie z.B. Toluol, nicht oder nur in geringer Menge bedürfen.

Überraschenderweise werden diese Aufgaben erfindungsgemäss durch ein Klebmittel erfüllt, welches als wirksame Bestandteile

a) ein Copolymerisat, welches durch Polymerisation von
$a_1$) 25 bis 64,8 Gew.-% eines oder mehrerer Alkylester der Acryl- und/oder Methacrylsäure mit 1 bis 8 Kohlenstoffatomen im Alkylrest,
$a_2$) 20 bis 40 Gew.-% Acrylnitril und/oder Methacrylnitril und/oder Vinylacetat,
$a_3$) 15 bis 35 Gew.-% eines oder mehrerer ω-Hydroxyalkylester der Acryl- und/oder Methacrylsäure mit 1 bis 5 Kohlenstoffatomen im Alkylrest,
$a_4$) 0,2 bis 5 Gew.-% Glycidylacrylat- und/oder Glycidylmethacrylat und gegebenenfalls
$a_5$) 0 bis 35 Gew.-% Acryl- und/oder Vinylmonomere von den Komponenten $a_1$) bis $a_4$) abweichender Zusammensetzung

in Gegenwart mercaptogruppenhaltiger Regler, welche mindestens 1 Hydroxylgruppe im Molekül aufweisen, erhalten worden ist, wobei die Summe der Monomeren $a_1$) bis $a_5$) 100 Gew.-% ergeben muss und das Copolymerisat ein mittleres Molekulargewicht von 800 bis 2500 aufweist,

b) ein oder mehrere Polyisocyanate und/oder deren partielle Umsetzungsprodukte mit Polyolen, wobei das Molekül im Durchschntit mindestens 2 Isocyanatgruppen aufweisen muss,
wobei die Komponenten a) und b) in einem solchen Verhältnis vorliegen, dass einer Hydroxylgruppe der Komponente a) 1 bis 1,3 Isocyanatgruppen der Komponente b) entsprechen,
sowie gegebenenfalls übliche Zusätze, wie Beschleuniger, Klebhilfsmittel, Pigmente und Füllstoffe, enthält.

Das der Aushärtung des Klebmittels zugrunde liegende Reaktionsprinzip ist die Umsetzung der Hxdroxylgruppen der Acryl- und/oder Methacrylsäure-ω-hydroxyalkylester (Komponente $a_3$)) mit den Isocyanatgruppen der Polyisocyanate oder deren partiellen Umsetzungsprodukten mit Polyolen (Komponente b)).

Es ist zwar aus dem Stand der Technik bekannt, dass man dieses Reaktionsprinzip für Aushärtungszwecke einsetzen kann, jedoch hat es sich in der Praxis gezeigt, dass bei diesem Reaktionsprinzip die Haftung der Klebstoffe auf Kunststoffoberflächen im allgemeinen unbefriedigend ist, wenn man als Polyolkomponente Polyetherole einsetzt, und dass bei Klebstoffen auf Basis von Polyesterolen die Haftung auf Metalloberflächen der Einwirkung von Wasser oder Wasserdampf auf Dauer nicht standhält. Diese Nachteile treten bei dem erfindungsgemässen Klebmittel nicht auf.

Die erfindungsgemässen Klebmittel weisen unter Erhalt aller anderen anwendungstechnischen Eigenschaften, wie z.B. Haftung auf Kunststoffoberflächen oder Metalloberflächen auch bei Einwirkung von Wasser oder Wasserdampf, nur geringe Gehalte an organischen Lösungsmitteln auf oder sind lösungsmittelfrei.

Dabei ist es insbesondere wesentlich, dass das Copolymerisat a) ein relativ niedriges mittleres Molekulargewicht von 800 bis 2500, vorzugsweise von 1200 bis 2000, aufweist. Das Molekulargewicht wird dabei in an sich bekannter Weise am Dampfdruckosmometer gemessen. Dieses niedrige Molekulargewicht wird dadurch erreicht, dass die Polymerisation der Monomeren $a_1$) bis $a_5$) in Gegenwart mercaptogruppenhaltiger Regler, die zusätzlich mindestens eine Hydroxylgruppe am Molekül tragen, durchgeführt wird. Als mercaptogruppenhaltige Regler haben sich insbesondere 2-Mercaptoethanol und 1-Thioglycerin bewährt.

Es war überraschend, dass mit den erfindungsgemässen Acrylpolymerisaten im sehr niedrigen Molekulargewichtsbereich von 1200 bis 2000 vergleichbar hohe Klebfestigkeitswerte gefunden werden.

Des weiteren war überraschend, dass die relativ grossen Mengen mercaptogruppenhaltiger Regler, die zur Einstellung der niedrigen Molekulargewichte notwendig sind und die in die Acrylpolymerisate chemisch eingebaut werden, sich nicht nachteilig auf die adhäsiven Eigenschaften der Klebmittel auswirken.

Die Polymerisation des Copolymerisates a) erfolgt in dem Fachmann bekannter Weise. Die Polymerisation kann als Emulsions- oder Lösungspolymerisation durchgeführt werden. Bevorzugt ist die Polymerisation in geringen Mengen eines Lösungsmittels, da bei einer Emulsionspolymerisation im Hinblick auf die Umsetzung mit Isocyanaten eine sorgfältige Trocknung der Produkte erforderlich ist.

Beispiele für geeignete Monomere $a_1$) sind Ethylacrylat, Butylacrylat, Butylmethacrylat, Methylacrylat, Methylmethacrylat, 2-Ethylhexylacrylat oder 2-Ethylhexylmethacrylat.

Die Komponente $a_2$) wird von Acrylnitril, Methacrylnitril oder Vinylacetat oder Gemischen hiervon gebildet. Die nitrilgruppenhaltigen Monomeren bewirken die gute Haftung der erfindungsgemässen Klebmittel auf den verschiedenen Kunststoff- und Metalloberflächen. Eine ähnliche Wirkung ist dem in das polymere Molekül eingebaute Vinylacetat zuzuschreiben. Vinylacetat enthaltende Copolymere haben den zusätzlichen Vorteil niedrigerer Viskosität, so dass die Verwendung gegebenenfalls reaktiver Lösungsmittel unnötig ist oder ein Erwärmen des Klebmittels zur Herabsetzung der Viskosität unnötig wird.

Aus der Literatur (so z.B. B. Vollmert, Grundriss der makromolekularen Chemie, Band 1, Karlsruhe, 1979) ist bekannt, dass die Copolymerisationsparameter für Vinylacetat und Acryl- oder Methacrylmonomere nicht sehr günstig liegen. Dies wirkt sich u.a. darin aus, dass die entstehenden Copolymeren eine erheblich von dem eingesetzten Monomerengemisch abweichende chemische Zusammensetzung aufweisen, was aus verschiedenen Gründen unerwünscht ist.

Aus der DE-OS 28 22 436 ist zu entnehmen, dass man zur Herstellung hydroxylgruppenhaltiger Vinylcopolymerer wegen der ungünstigen Copolymerisationsparameter nicht ω-Hydroxyalkylacryl- oder -methacrylester einsetzt, sondern besser hydroxylgruppenhaltige Allylester der allgemeinen Formel,

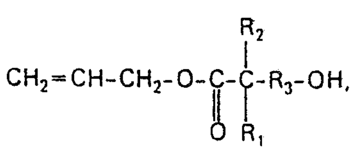

weil diese eher einen gleichmässigen Einbau in das Copolymerisat gewährleisten. Es war deshalb besonders überraschend, dass sich mit der erfindungsgemässen Monomerzusammensetzung im beanspruchten Molekulargewichtsbereich hydroxylgruppenhaltige Copolymerisate herstellen lassen, die wertvolle klebtechnische Eigenschaften aufweisen.

Beispiele geeigneter Monomere $a_3$) sind 2-Hydroxyethylacrylat oder -methacrylat, 3-Hydroxypropylacrylat oder -methacrylat, 2-Hydroxypropylacrylat oder -methacrylat, Butandiol-1,4-monoacrylat oder -monomethacrylat.

Zusätzlich können in dem Monomerengemisch 0 bis 35 Gew.-% andere Acryl- und/oder Vinylmonomere enthalten sein. Beispiele derartiger Monomere sind: Vinylpropionat, Styrol, Acryl- oder Methacrylamid.

Es hat sich als günstig herausgestellt, das Copolymerisat a) in einem mindestens zweiwertigen Alkohol zu lösen, wobei jedoch nicht mehr als 30 Gew.-%, bezogen auf die Komponente a), verwendet werden sollen. Beispiele derartiger Lösungsmittel sind die besonders bevorzugten Polyalkylenglykole, wie z.B. Polyethylenglykole mit einem Molekulargewicht von 200 bis 400.

Als Polyisocyanat wird vorzugsweise ein Polyisocyanat der allgemeinen Formel

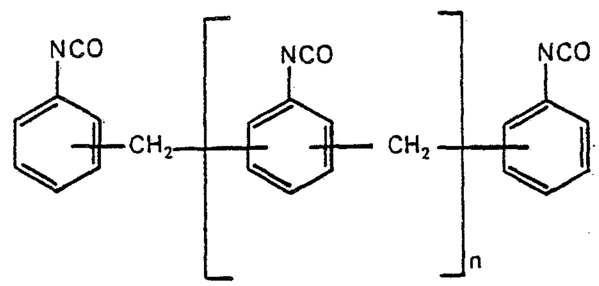

wobei n $\leqq$ 3 ist,

oder

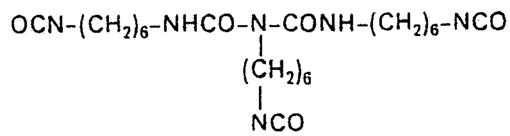

oder

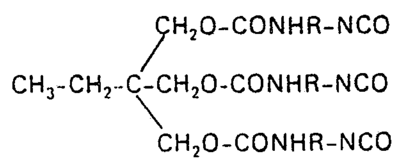

worin R den Rest

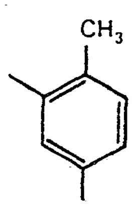

und/oder

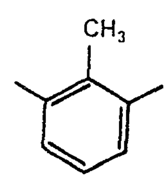

bedeutet,

verwendet. Diese Isocyanate sind im Handel erhältlich. Jedoch sind auch andere Polyisocyanate, wie z.B. 1,6-Hexamethylendiisocyanat; 2,4,4-Trimethyl-1,6-Hexamethylendiisocyanat; 3-Isocyanatomethyl-3,5,5-trimethylcyclohexylisocyanat; 1,4-Tetramethylendiisocyanat; 2,4- und 2,6-Hexahydrotoluylendiisocyanat; Hexahydro-1,3- bzw. -1,4-phenylendiisocyanat; 1,3- und 1,4-Phenylendiisocyanat; 2,4- und 2,6-Toluylendiisocyanat; 4,4'-Diisocyanato-diphenylmethan; Naphthylen-1,5-diisocyanat; m-Xylylendiisocyanat; Tris-(4-isocyanatophenyl)-thiophosphat; 4,4',4''-Triisocyanatotriphenylmethan, 2,4,6-Triisocyanato-toluol oder 2,4,4'-Triisocyanato-diphenylether geeignet. Die Isocyanate müssen jedoch die Bedingung erfüllen, dass sie im Durchschnitt mindestens 2 Isocyanatgruppen pro Molekül aufweisen.

Anstelle der reinen Polyisocyanate können auch deren partielle Umsetzungsprodukte mit Polyether- oder Polyesterpolyolen verwendet werden. Dabei wird ein Klebmittel bevorzugt, bei dem die Komponente b) ein partielles Umsetzungsprodukt eines oder mehrerer Polyisocyanate mit Polyether- oder Polyesterpolyolen eines Molekulargewichtes < 2000 ist, wobei die Polyether- oder Polyesterpolyole im durchschnittlichen Molekül mindestens 2 Hydroxylgruppen aufweisen, und wobei die Polyisocyanate mit den Polyolen in einem solchen Verhältnis umgesetzt worden sind, dass einer Hydroxylgruppe 1,5 bis 3 Isocyanatgruppen entsprachen.

Beispiele geeigneter Polyetherole sind lineare oder verzweigte Polyetherole auf Basis von Ethylenoxid, Propylenoxid und Butylenoxid, Polythioether und Addukte von Ethylenoxiden an Polyamine und alkoxylierte Phosphorsäuren.

Beispiele für geeignete Polyesterole sind lineare oder verzweigte Polyesterole, wie sie aus mehrwertigen, vorzugsweise zweiwertigen Carbonsäuren, wie Adipinsäure, Sebacinsäure, Phthalsäure, halogenierten Phthalsäuren, Maleinsäure, Benzol-1,2,4-tricarbonsäure, monomeren, dimeren oder trimeren Fettsäuren und mehrwertigen Alkoholen, wie z.B. Ethylenglykol, Polyethylenglykol, Propylenglykol, Polypropylenglykolen, Butandiol-1,3 und -1,4, 2,2-Dimethylpropandiol-1,3, Hexandiol-1,6, 1,1,1-Trimethylolpropan, Hexantriolen oder Glycerin auf üblichem Wege erhalten werden.

Die Umsetzung der Polyisocyanate mit den Polyether- oder Polyesterpolyolen erfolgt somit in einem solchen Verhältnis, dass im Umsetzungsprodukt je Molekül im Durchschnitt mindestens 2 Isocyanatgruppen vorliegen.

Enthält das erfindungsgemässe Klebmittel mindestens difunktionelle Alkohole als Lösungsmittel für das Copolymerisat a), reagieren diese mit den Isocyanaten der Komponente b) und werden dadurch in das Klebmittelgerüst eingebunden.

Die Aushärtungszeit bzw. Aushärtungstemperatur des Klebmittels kann in an sich bekannter Weise wesentlich durch Zusatz eines Beschleunigers verkürzt bzw. herabgesetzt werden. Besonders bevorzugt ist deshalb ein Klebmittel, welches als Beschleuniger bis zu 2 Gew.-%, bezogen auf die Summe der Komponenten a) und b), eines tertiären Amins und/oder einer zinnorganischen Verbindung enthält. Als tertiäre Amine sind besonders Dimethylbenzylamin, Dicyclohexylmethylamin, Dimethylpiperazin, Dimethylaminethanol, 1,2-Dimethylimidazol, N-Methyl- bzw. N-Ethyl-morpholin, Dimethylcyclohexylamin, 1-Aza-bicyclo-(3,3,0)-octan oder 1,4-Diazabicyclo-(2,2,2)-octan geeignet. Beispiele gut brauchbarer zinnorganischer Verbindungen sind Dibutylzinndilaurat oder Zinn(II)-octoat.

Das erfindungsgemässe Klebmittel kann noch weitere Hilfsstoffe enthalten. Beispiele derartiger Hilfsstoffe sind Klebhilfsmittel, wie z.B. Polychloropren, Acrylnitrilbutadien-Copolymerisate, Polyamide oder Polyurethane. Diese Klebhilfsmittel werden vorzugsweise in Mengen bis zu 15 Gew.-%, bezogen auf 100 Gew.-% der Bestandteile a) bis b), zugesetzt.

Als Hilfsstoffe kann man dem Klebmittel auch Pigmente und/oder Füllstoffe zusetzen. Hierfür sind sowohl anorganische als auch organische Produkte, wie z.B. Titandioxid, Eisenoxid, Chromoxid, Bariumsulfat, Quarzmehl, Talkum, Bentonit, geeignet.

Die folgenden Beispiele dienen der weiteren Erläuterung der Erfindung. Sie zeigen die Herstellung der erfindungsgemässen Klebmittel sowie die klebtechnischen Eigenschaften.

Herstellung der erfindungsgemässen Klebmittel

1. Rohstoffe

1.1. Acrylpolymerisate a)

Zur Herstellung der Acrylpolymerisate a) in Lösung legt man 120 g Toluol vor, erhitzt zum Rückfluss und tropft dann in 1 Stunde 400 g des Monomerengemisches $a_1$) bis $a_5$), das 0,1 bis 0,5 Gew.-% Azodiisobuttersäuredinitril und den mercaptogruppenhaltigen Regler gelöst enthält, zu, wobei der Rückfluss erhalten bleiben soll. Nach weiterem dreistündigen Erhitzen unter Rückfluss zieht man die geringen Mengen an nicht umgesetzten Restmonomeren zusammen mit dem Toluol im Vakuum ab und setzt dem Acrylpolymerisat vor dem Erkalten entweder organische Lösungsmittel, die nicht mit Isocyanatgruppen reagieren, wie z.B. Aceton, Methylethylketon, Ethylacetat, Isopropylacetat oder Toluol, oder mindestens zweiwertige Alkohole, wie z.B. Polyethylen- oder Polypropylenglykole, zu. Es ist auch möglich, völlig ohne Lösungsmittel oder Alkohole zu arbeiten. In einem solchen Falle ist es gegebenenfalls zweckmässig, das Acrylpolymerisat vor der Anwendung auf 30 bis 60°C zu erwärmen, falls die Viskosität bei Raumtemperatur zu hoch liegt.

Die chemische Zusammensetzung der einzelnen Acrylpolymerisate, Art und Menge des mercaptogruppenhaltigen Reglers und das mittlere Molekulargewicht, gemessen im Dampfdruckosmometer, gehen aus Tabelle 1 hervor. Des weiteren enthält Tabelle 1 die zugesetzten Mengen an Alkoholen bzw. an organischen Lösungsmitteln.

1.2. Polyisocyanate

Als Polyisocyanate werden vier handelsübliche Produkte verwendet: unter der Bezeichnung $b_1$ ein Polyphenyl-polymethylen-polyisocyanat (Roh-MDI) der allgemeinen Formel

$b_1$ 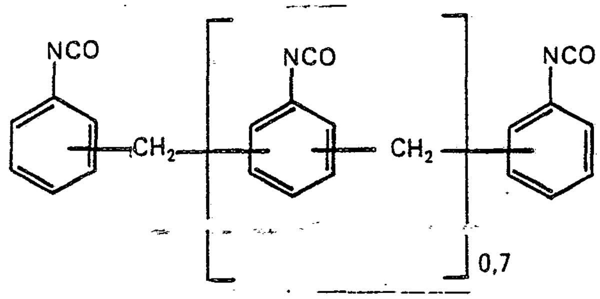

und unter der Bezeichnung $b_2$ ein Triisocyanat der Formel

$b_2$ 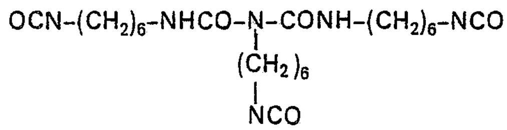

Beide Polyisocyanate werden in lösungsmittelfreier Form angewendet.

Unter der Bezeichnung $b_3$ wird ein Polyisocyanat der Formel

$b_3$ 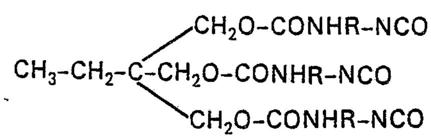

worin R den Rest

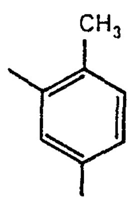

und/oder

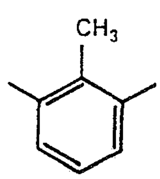

bedeutet,

eingesetzt, das als 75 gew.-%ige Lösung in Ethylacetat vorliegt.

Des weiteren wird unter der Bezeichnung $b_4$ eine 60 gew.-%ige Lösung in Methylethylketon eines Umsetzungsproduktes aus 3 Mol 2,4-Toluylendiisocyanat und 1 Mol eines trifunktionellen Polyesterols mit einem Molekulargewicht von 600, erhalten aus Adipinsäure, Ethylenglykol, 2,2-Dimethylpropandiol-1,3 und Trimethylolpropan, eingesetzt.

Der Gehalt an freien Isocyanatgruppen, bezogen auf Feststoff, beträgt:

Polyisocyanat $b_1$ 31,2 Gew.-%
Polyisocyanat $b_2$ 22,7 Gew.-%
Polyisocyanat $b_3$ 13,0 Gew.-%
Polyisocyanat $b_4$ 11,2 Gew.-%

2. Zubereitung der Klebmittel

Zur Herstellung der erfindungsgemässen Klebmittellösungen werden die Polyisocyanate mit den Acrylpolymerisaten intensiv vermischt. Gegebenenfalls können zur Einstellung der gewünschten Viskosität des Klebmittels wasserfreie Lösungsmittel, wie sie unter 1.1. aufgeführt sind, zugesetzt werden. Weitere Zusätze, wie Beschleuniger, Klebhilfsmittel, Pigmente und Füllstoffe, können gelöst bzw. dispergiert werden, wobei man zweckmässigerweise diese Zusätze dem Acrylpolymerisat vor dem Abmischen mit dem Polyisocyanat zugibt.

Die genauen Rezepturen der Klebmittel sind der Tabelle 1 zu entnehmen. Die Rezepturen der Nrn. 1 bis 11 beschreiben die erfindungsgemässen Klebmittel. Danach folgen unter den Rezepturen 12, 13 und 14 Vergleichsklebmittel. Rezeptur Nr. 12 entspricht einem Klebmittel der DE-AS 2524197, in der ein carboxylgruppenhaltiges Acrylcopolymerisat mit Epoxidharz gehärtet wird. Das Epoxidharz ist auf Basis von Bisphenol A/Epichlorhydrin und hat ein Epoxidäquivalent von 180 g/val.

Das Vergleichsklebmittel Nr. 13 enthält anstelle des Acrylcopolymerisates ein difunktionelles Polyetherol auf Basis von Propylen- und Ethylenoxid mit einer Hydroxylzahl von 90 mg KOH/g.

Das Vergleichsklebmittel Nr. 14 enthält anstelle des Acrylcopolymerisates ein Polyesterol mit einer Funktionalität von ca. 2,5 und einer Hydroxylzahl von 109 mg KOH/g. Der Polyester ist durch Kondensation von Adipinsäure mit Diethylenglykol, Ethylenglykol und Trimethylolpropan erhalten worden.

Verklebung und anwendungstechnische Prüfung der Klebmittel

Zur anwendungstechnischen Prüfung der Klebmittel werden zwei Festigkeitsprüfungen herangezogen:

a) Trommelschälfestigkeit nach DIN 53 295
b) Winkelschälfestigkeit nach DIN 53 282

Die Trommelschälfestigkeit wird an drei verschiedenen Verbunden ermittelt:

Verbund Aluminium/Polyethylen (PE)

Verbund Aluminium/Epoxidharz-Glasfaser-Laminat (GFK)
Verbund Aluminium/ABS

Die Aluminiumbleche bestehen aus der Qualität Al Cu Mg 2pl und werden vor dem Verkleben entfettet und einem Chromat-Schwefelsäure-Beizprozess (Pickling-Beize) unterzogen. Das Polyethylen ist aufgerauht und vorbehandelt, und das Epoxidharz-Glasfaser-Laminat (GFK) ist angeschliffen.

Die Klebmittel werden in einer Menge von 60 g/m² Feststoff auf die Adhärenden aufgetragen und die Lösungsmittel, soweit vorhanden, bei Raumtemperatur oder erhöhter Temperatur, z.B. 70°C, abgedunstet. Die Aushärtung der Klebmittel wird bei 90°C während 20 Minuten unter einem Pressdruck von 0,5 N/mm² vorgenommen. Nach Abkühlung wird bei 20°C geschält.

Die Winkelschälfestigkeit wird an Probekörpern aus aufgerauhtem, vorbehandeltem Polyethylen einer Dicke von 1,0 mm ermittelt. Der Kleberauftrag, die Abdunstung der Lösungsmittel und die Aushärtung werden wie oben beschrieben durchgeführt. Die Winkelschälprüfung wird bei 20°C vorgenommen. Zusätzlich wird mit weiteren Probekörpern eine Heisswasserlagerung bei 95°C über 3 Tage durchgeführt. Vor dem Schälversuch werden die Probekörper in Wasser von 20°C abgekühlt und noch feucht geschält. Diese Heisswasserlagerung ist als Kurzzeittest sehr gut geeignet, um die Beständigkeit der Klebmittel gegenüber Wasser und Feuchtigkeit zu prüfen.

Die erhaltenen Festigkeitswerte sind in der Tabelle 2 angeführt. Aus den Werten geht hervor, dass der Vergleichskleber Nr. 12 erheblich geringere Festigkeitswerte als die erfindungsgemässen Klebmittel der Nr. 1 bis 11 liefert. Vergleichskleber Nr. 13 haftet sehr schlecht auf Kunststoffoberflächen. Vergleichskleber Nr. 14 haftet zwar besser auf Kunststoffoberflächen, fällt aber nach der Wasserlagerung in der Festigkeit stark ab.

Abhängigkeit der Trommelschälfestigkeit vom mittleren Molekulargewicht des Copolymerisates a)

In der Klebmittelrezeptur Nr. 1 wird das Acrylcopolymerisat mit verschiedenen mittleren Molekulargewichten eingesetzt. Die Fig. 1 zeigt die Abhängigkeit der Trommelschälfestigkeit des Verbundes Aluminium/Polyethylen vom mittleren Molekulargewicht des Acrylcopolymerisates a). Es ist ersichtlich, dass besonders hohe Festigkeiten oberhalb eines Molekulargewichtes von 1200 erhalten werden. Die Festigkeiten fallen bei Molekulargewichten >2000 allmählich ab. Gleichzeitig steigt die Viskosität des Acrylcopolymerisates a) und damit auch der Bedarf an Lösungsmitteln jedoch beträchtlich an.

Tabelle 1 – Klebmittelrezepturen

| | Acrylpolymerisat a) | | | | Polyisocyanat b) | | | |
|---|---|---|---|---|---|---|---|---|
| Rezeptur Nr. | Monomerengemisch | Regler Gew.-%[1)] | mittl. Molekulargewicht | Gew.-Teile | Gew.-Teile | Mol-Verhältnis OH : NCO | Lösungsmittel Gew.-Teile | Sonstige Zusätze Gew.-Teile |
| 1 | I | 4,0 2-Mercapto-ethanol | 1700 | 100 | 65,5 $b_1$ | 1 : 1,2 | - | 15 Polyethylenglykol MG 200 |
| 2 | II | 4,8 2-Mercapto-ethanol | 1550 | 100 | 41,7 $b_1$ | 1 : 1,2 | 10 Aceton | - |
| 3 | III | 4,0 2-Mercapto-ethanol | 1650 | 100 | 38,7 $b_1$ | 1 : 1,15 | 18 Aceton | - |
| 4 | IV | 4,0 2-Mercapto-ethanol | 1650 | 100 | 38,7 $b_1$ | 1 : 1,15 | - | - |
| 5 | V | 4,8 2-Mercapto-ethanol | 1500 | 100 | 41,7 $b_1$ | 1 : 1,2 | - | - |
| 6 | VI | 4,8 1-Thioglycerin | 1640 | 100 | 46,9 $b_1$ | 1 : 1,2 | - | 15 Polypropylenglykol MG 200 |
| 7 | VII | 4,0 2-Mercapto-ethanol | 1750 | 100 | 39,0 $b_1$ | 1 : 1,2 | 10 Aceton | - |

Tabelle 1 – Fortsetzung

| Rezeptur Nr. | Monomerengemisch (Acrylpolymerisat a)) | Regler Gew.-%[1] | mittl. Molekulargewicht | Gew.-Teile | Polyisocyanat b) Gew.-Teile | Mol-Verhältnis OH : NCO | Lösungsmittel Gew.-Teile | Sonstige Zusätze Gew.-Teile |
|---|---|---|---|---|---|---|---|---|
| 8 | [illegible] | 4,0 2-Mercapto-ethanol | 1700 | 100 | 56,8 b | 1 : 1,2 | 10 Aceton | 0,1 1,4-Diazabicyclo-(2,2,2)-octan |
| 9 | III | 4,0 2-Mercapto-ethanol | 1650 | 100 | 84,3 $b_1$ | 1 : 1,05 | – | – |
| 10 | III | 4,0 2-Mercapto-ethanol | 1650 | 100 | 97,8 $b_4$ | 1 : 1,05 | – | – |
| 11 | II | 4,8 2-Mercapto-ethanol | 1550 | 100 | 41,7 $b_1$ | 1 : 1,2 | 15 Aceton | 20 Titandioxid |
| | | | | | Vergleichsklebmittel | | | |
| 12 | VIII | 0,2 n-Dodecanthiol | 700000 | 80 | – | – | 150 Aceton | 20 Epoxidharz |
| 13 | IX | – | – | 100 | 25,9 $b_1$ | 1 : 1,2 | – | – |
| 14 | X | – | – | 10 | 31,4 $b_1$ | 1 : 1,2 | – | – |

[1] Zusatz bezogen auf 100 Gew.-Teile Monomerengemisch
[2] ermittelt durch gelchromatographische Analyse

Erläuterungen zur Tabelle 1
Zusammensetzung des Monomerengemisches

I:
- 45,5 Gew.-% Butylacrylat $a_1$
- 28,0 Gew.-% Acrylnitril $a_2$
- 25,0 Gew.-% 2-Hydroxyethylacrylat $a_3$
- 1,5 Gew.-% Glycidylmethacrylat $a_4$

II:
- 48,0 Gew.-% Butylacrylat $a_1$
- 23,0 Gew.-% Acrylnitril $a_2$
- 27,0 Gew.-% 2-Hydroxypropylacrylat $a_3$
- 2,0 Gew.-% Glycidylmethacrylat $a_4$

III:
- 50,5 Gew.-% Methylmethacrylat $a_1$
- 24,0 Gew.-% Acrylnitril $a_2$
- 24,0 Gew.-% 2-Hydroxyethylacrylat $a_3$
- 1,5 Gew.-% Glycidylmethacrylat $a_4$

IV:
- 43,0 Gew.-% Butylacrylat $a_1$
- 32,0 Gew.-% Vinylacetat $a_2$
- 24,0 Gew.-% 2-Hydroxyethylacrylat $a_3$
- 1,0 Gew.-% Glycidylmethacrylat $a_4$

V:
- 15,5 Gew.-% Ethylacrylat $a_1$
- 26,5 Gew.-% 2-Ethylhexylacrylat $a_1$
- 30,0 Gew.-% Vinylacetat $a_2$
- 27,0 Gew.-% 2-Hydroxypropylacrylat $a_3$
- 1,0 Gew.-% Glycidylmethacrylat $a_4$

VI:
- 15,0 Gew.-% Ethylacrylat $a_1$
- 31,5 Gew.-% Butylacrylat $a_1$
- 27,0 Gew.-% Acrylnitril $a_2$
- 25,0 Gew.-% 2-Hydroxyethylacrylat $a_3$
- 1,5 Gew.-% Glycidylmethacrylat $a_4$

VII:
- 42,0 Gew.-% Butylacrylat $a_1$
- 26,0 Gew.-% Acrylnitril $a_2$
- 23,0 Gew.-% 2-Hydroxyethylacrylat $a_3$
- 2,0 Gew.-% Glycidylmethacrylat $a_4$
- 7,0 Gew.-% Styrol $a_5$

VIII:
- 60,9 Gew.-% Ethylacrtylat
- 35,4 Gew.-% Acrylnitril
- 3,7 Gew.-% Acrylsäure
- (gemäss DE-PS 25 24 197)

IX: Polyetherol

X: Polyesterol

Tabelle 2 – Anwendungstechnische Prüfung der Klebmittel

| Klebmittel-rezeptur Nr. | Trommelschälfestigkeit DIN 53 295 Nmm/mm Al/PE | Al/GFK | Al/ABS | Winkelschälfestigkeit DIN 53 282 N/mm ohne Belastung | nach 3 Tagen Heisswasser-lagerung |
|---|---|---|---|---|---|
| 1 | 340 | 95 | 205 | 4,0 | 3,6 |
| 2 | 330 | 85 | 215 | 3,8 | 3,4 |
| 3 | 335 | 80 | 220 | 3,7 | 3,5 |
| 4 | 340 | 88 | 230 | 3,9 | 3,0 |
| 5 | 321 | 81 | 207 | 3,8 | 2,9 |
| 6 | 315 | 84 | 209 | 3,4 | 3,0 |
| 7 | 320 | 79 | 204 | 3,9 | 3,6 |
| 8 | 300 | 69 | 180 | 3,5 | 3,1 |
| 9 | 290 | 60 | 170 | 3,4 | 3,1 |
| 10 | 280 | 64 | 155 | 3,3 | 3,0 |
| 11 | 330 | 84 | 208 | 4,2 | 3,8 |
| Vergleichs-kleber | | | | | |
| 12 | 45 | 20 | 27 | 1,2 | 1,0 |
| 13 | 5 | 3 | 5 | 0,1 | 0,07 |
| 14 | 145 | 39 | 48 | 3,0 | 0,73 |

**Patentansprüche**

1. Härtbares Klebmittel, welches als wirksame Bestandteile

a) ein Copolymerisat, welches durch Polymerisation von

$a_1$) 25 bis 64,8 Gew.-% eines oder mehrerer Alkylester der Acryl- und/oder Methacrylsäure mit 1 bis 8 Kohlenstoffatomen im Alkylrest,

$a_2$) 20 bis 40 Gew.-% Acrylnitril und/oder Methacrylnitril und/oder Vinylacetat,

$a_3$) 15 bis 35 Gew.-% eines oder mehrerer ω-Hydroxyalkylester der Acryl- und/oder Methacrylsäure mit 1 bis 5 Kohlenstoffatomen im Alkylrest,

$a_4$) 0,2 bis 5 Gew.-% Glycidylacrylat- und/oder Glycidylmethacrylat und gegebenenfalls

$a_5$) 0 bis 35 Gew.-% Acryl- und/oder Vinylmonomere von den Komponenten $a_1$) bis $a_4$) abweichender Zusammensetzung

in Gegenwart mercaptogruppenhaltiger Regler, welche mindestens 1 Hydroxylgruppe im Molekül aufweisen, erhalten worden ist, wobei die Summe der Monomeren $a_1$) bis $a_5$) 100 Gew.-% ergeben muss und das Copolymerisat ein mittleres Molekulargewicht von 800 bis 2500 aufweist,

b) ein oder mehrere Polyisocyanate und/oder deren partielle Umsetzungsprodukte mit Polyolen, wobei das Molekül im Durchschnitt mindestens 2 Isocyanatgruppen aufweisen muss,

wobei die Komponenten a) und b) in einem solchen Verhältnis vorliegen, dass einer Hydroxylgruppe der Komponente a) 1 bis 1,3 Isocyanatgruppen der Komponente b) entsprechen,

sowie gegebenenfalls übliche Zusätze, wie Beschleuniger, Klebhilfsmittel, Pigmente und Füllstoffe, enthält.

2. Klebmittel nach Anspruch 1, dadurch gekennzeichnet, dass das Copolymerisat a) ein mittleres Molekulargewicht von 1200 bis 2000 aufweist.

3. Klebmittel nach Anspruch 1 oder 2, dadurch gekennzeichnet, dass das Copolymerisat a) in Gegenwart von 2-Mercaptoethanol oder 1-Thioglycerin erhalten worden ist.

4. Klebmittel nach Anspruch 1, 2 oder 3, dadurch gekennzeichnet, dass das Copolymerisat a) in maximal 30 Gew.-% eines mindestens zweiwertigen Alkohols gelöst ist.

5. Klebmittel nach Anspruch 4, dadurch gekennzeichnet, dass als Lösungsmittel Polyalkylenglykole eines Molekulargewichtes von 200 bis 400 verwendet werden.

6. Klebmittel nach einem oder mehreren der vorhergehenden Ansprüche, dadurch gekennzeichnet, dass die Kompnente b) ein Polyisocyanat der allgemeinen Formel

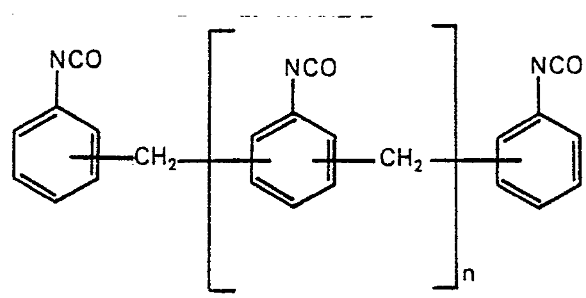

wobei n $\leqq 3$ ist,

oder

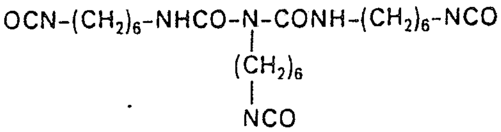

oder

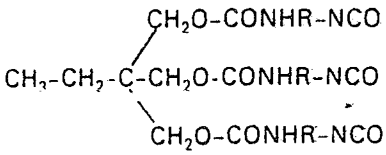

worin R den Rest

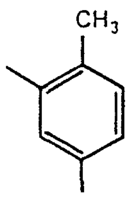

und/oder

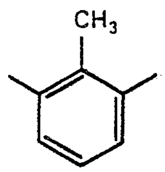

bedeutet, ist.

7. Klebmittel nach einem oder mehreren der vorhergehenden Ansprüche, dadurch gekennzeichnet, dass die Komponente b) ein partielles Umsetzungsprodukt eines oder mehrerer Polyisocyanate mit Polyether- oder Polyesterpolyolen eines Molekulargewichtes <2000 ist, wobei die Polyether- oder Polyesterpolyole im durchschnittlichen Molekül mindestens 2 Hydroxylgruppen aufweisen, und wobei die Polyisocyanate mit den Polyolen in einem solchen Verhältnis umgesetzt worden sind, dass einer Hydroxylgruppe 1,5 bis 3 Isocyanatgruppen entsprachen.

8. Klebmittel nach einem oder mehreren der vorhergehenden Ansprüche, dadurch gekennzeichnet, dass es als Beschleuniger bis zu 2 Gew.-%, bezogen auf die Summe der Komponenten a) und b), eines tertiären Amins und/oder einer zinnorganischen Verbindung enthält.

**Claims**

1. Hardenable adhesive which contains, as active constituents:
a) a copolymer which has been obtained by the polymerisation of:
$a_1$) 25 to 64.8% by weight of one or more alkyl esters of acrylic and/or methacrylic acid having 1 to 8 carbon atoms in the alkyl radical,
$a_2$) 20 to 40% by weight of acrylonitrile and/or methacrylonitrile and/or vinyl acetate,
$a_3$) 15 to 35% by weight of one or more ω-hydroxyalkyl esters of acrylic and/or methacrylic acid having 1 to 5 carbon atoms in the alkyl radical,
$a_4$) 0.2 to 5% by weight of glycidyl acrylate and/or glycidyl methacrylate and, if appropriate,
$a_5$) 0 to 35% by weight of acrylic and/or vinyl monomers having a different composition from that of components $a_1$) to $a_4$),
in the presence of regulators containing mercapto groups and having at least 1 hydroxyl group in the molecule, it being necessary for monomers $a_1$) to $a_5$) to add up to 100% by weight, and the copolymer having an average molecular weight of 800 to 2,500, and
b) one or more polyisocyanates and/or their partial reaction products with polyols, it being necessary for the molecule to have on average at least 2 isocyanate groups,
components a) and b) being present in a ratio such that 1 to 1.5 isocyanate groups of component b) correspond to 1 hydroxyl group of component a),
and which also contain, if appropriate, customary additives such as accelerators, adhesion promoters, pigments and fillers.

2. Adhesive according to Claim 1, characterised in that the copolymer a) has an average molecular weight of 1,200 to 2,000.

3. Adhesive according to Claim 1 or 2, characterised in that the copolymer a) has been obtained in the presence of 2-mercaptoethanol or 1-thioglycerol.

4. Adhesive according to Claim 1, 2 or 3, characterised in that the copolymer a) is dissolved in at most 30% by weight of an alcohol which is at least dihydric.

5. Adhesive according to Claim 4, characterised in that polylakylene glycols having a molecular weight of 200 to 400 are used as solvents.

6. Adhesive according to one or more of the preceding claims, characterised in that component b) is a polyisocyanate of the general formula

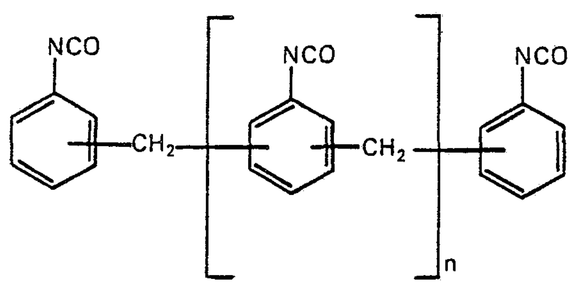

in which n ≦ 3,
or

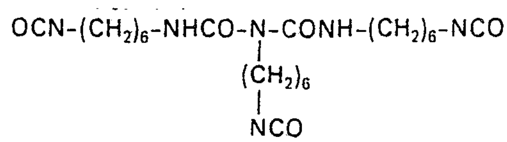

or

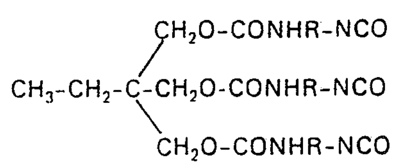

in which R denotes the radical

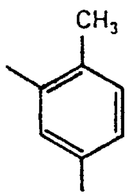

and/or

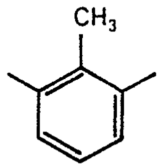

.

7. Adhesive according to one or more of the preceding claims, characterised in that component b) is a partial reaction product of one or more polyisocyanates with polyether or polyester-polyols having a molecular weight <2,000, the polyether- or polyester-polyols having at least 2 hydroxyl groups in the average molecule, and the polyisocyanate having been reacted with the polyols in a ratio such that 1.5 to 3 isocyanate groups corresponded to 1 hydroxyl group.

8. Adhesive according to one or more of the preceding claims, characterised in that it contains, as the accelerator, up to 2% by weight, relative to the sum of components a) and b), of a tertiary amine and/or of an organic tin compound.

**Revendications**

1. Adhésif durcissable qui contient comme constituants actifs:

a) un produit de copolymérisation qui a été obtenu par polymérisation de

$a_1$) 25 à 64,8% en poids d'un ou plusieurs esters alkyliques d'acide acrylique et/ou méthacrylique, contenant 1 à 8 atomes de carbone dans le radical alkyle,

$a_2$) 20 à 40% en poids d'acrylonitrile et/ou de méthacrylonitrile et/ou d'acétate de vinyle,

$a_3$) 15 à 35% en poids d'un ou plusieurs esters ω-hydroxyalkyliques d'acide acrylique et/ou méthacrylique contenant 1 à 5 atomes de carbone dans le radical alkyle,

$a_4$) 0,2 à 5% en poids d'acrylate de glycidyle et/ou de méthacrylate de glycidyle et éventuellement

$a_5$) 0 à 35% en poids de monomères acryliques et/ou vinyliques de composition différentes des constituants $a_1$) à $a_4$), en présence de régulateurs à groupes mercaptan qui contiennent au moins 1 groupe hydroxyle par molécule, le total des monomères $a_1$) à $a_5$) devant donner 100% et le produit de copolymérisation présentant un poids moléculaire moyen de 800 à 2500,

b) un ou plusieurs polyisocyanates et/ou produits de réaction partielle de ceux-ci sur des polyols, la molécule devant contenir en moyenne au moins 2 groupes isocyanate,

les constituants a) et b) étant présents en un rapport tel qu'à un groupe hydroxyle du constituant a) corresponde 1 à 1,3 groupe isocyanate du constituant b),

ainsi qu'éventuellement des additifs usuels tels que des accélérateurs, adjuvants d'adhérence, pigments et charges.

2. Adhésif selon la revendication 1, caractérisé par le fait que le produit de copolymérisation a) présente un poids moléculaire moyen de 1200 à 2000.

3. Adhésif selon l'une des revendications 1 et 2, caractérisé par le fait que le produit de copolymérisation a) a été obtenu en présence de 2-mercaptoéthanol ou de 1-thioglycérol.

4. Adhésif selon l'une des revendications 1, 2 et 3, caractérisé par le fait que le produit de copolymérisation a) est dissous dans 30% en poids au maximum d'un alcool au moins difonctionnel.

5. Adhésif selon la revendication 4, caractérisé par le fait que l'on utilise comme solvants des polyalkylèneglycols d'un poids moléculaire de 200 à 400.

6. Adhésif selon une ou plusieurs des revendications précédentes, caractérisé par le fait que le constituant b) est un polyisocyanate de la formule générale:

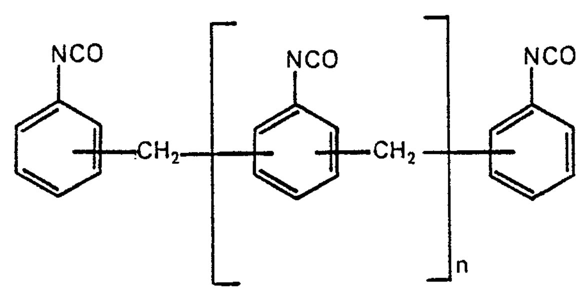

dans laquelle n ≦ 3

ou

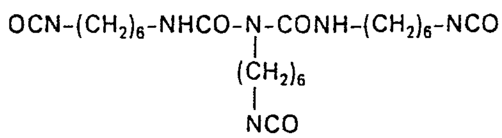

ou

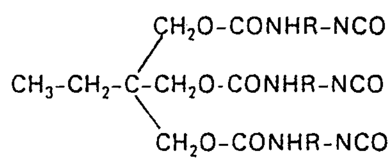

dans laquelle R représente le radical

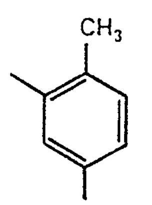

et/ou

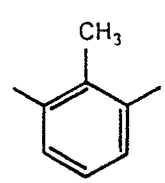

.

7. Adhésif selon une ou plusieurs des revendications précédentes, caractérisé par le fait que le constituant b) est un produit de réaction partielle d'un ou plusieurs polyisocyanates sur des polyéther- ou polyesterpolyols d'un poids moléculaire <2000, les polyéther- ou polyesterpolyols contenant dans la molécule moyenne au moins 2 groupes hydroxyle et les polyisocyanates ayant réagi sur les polyols en un rapport tel qu'à un

groupe hydroxyle correspondent 1,5 à 3 groupes isocyanate.

8. Adhésif selon une ou plusieurs des revendications précédentes, caractérisé par le fait qu'il contient comme accélérateur jusqu'à 2% en poids, relativement à la somme des constituants a) et b), d'une amine tertiaire et/ou d'un composant organoétain.

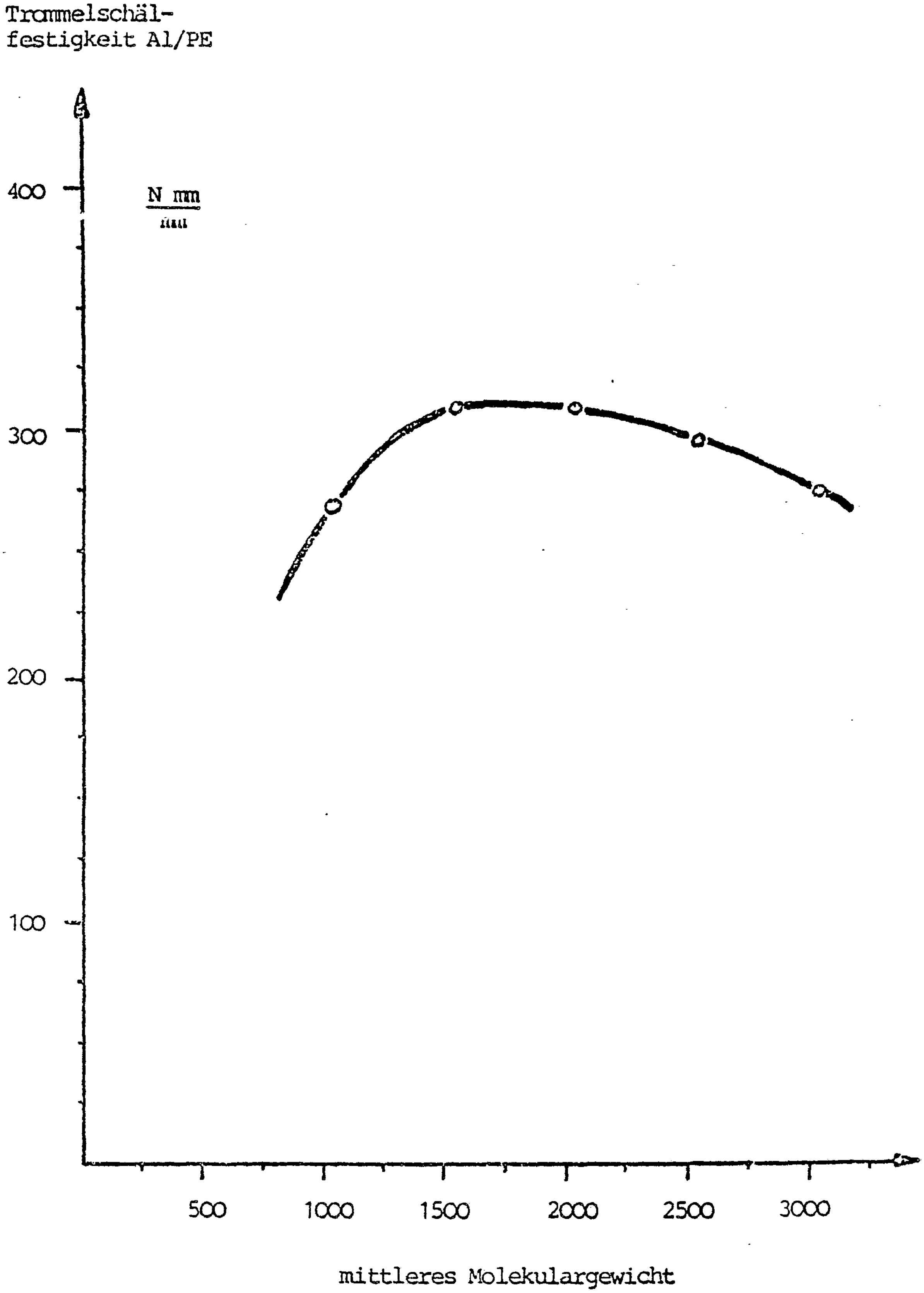

Trommelschäl-
festigkeit Al/PE
N mm
mm
400
300
200
100
500
1000
1500
2000
2500
3000
mittleres Molekulargewicht


Fig. 1